# EUROPÄISCHE PATENTSCHRIFT

(11) **EP 1 172 986 B1**
(45) Veröffentlichungstag und Bekanntmachung des Hinweises auf die Patenterteilung: **18.12.2013**
(21) Anmeldenummer: 01113104.2
(22) Anmeldetag: 29.05.2001
(51) Int. Cl.: H04L 29/06

(54) **Verfahren und Anordnung zur gesicherten Nutzung eines Dienstes**
Method and arrangement for the secure use of a service
Procédé et dispositif pour l'utilisation sécurisée d'un service

(30) Priorität: 08.06.2000 DE 10028371
(43) Veröffentlichungstag der Anmeldung: 16.01.2002
(73) Patentinhaber: Siemens Aktiengesellschaft, 80333 München (DE)
(72) Erfinder: Frank, Michael, Dr., 81371 Muenchen (DE); Rieken, Ralf, Dr., Reston, VA 20190 (US)

(56) Entgegenhaltungen:
- SIETMANN R: "Jini organisiert das Netz selbst" FUNKSCHAU, [Online] Bd. 23, 30. Oktober 1998 (1998-10-30), Seiten 82-84, XP002324167 Gefunden im Internet: URL:http://funkschau.de/heftarchiv/pdf/199 8/fs23/fs9823082.pdf> [gefunden am 2005-04-11]
- CZERWINSKI S E ET AL: "An Architecture for a Secure Service Discovery Service" PROCEEDINGS OF MOBICOM '99, Bd. 5, 15. August 1999 (1999-08-15), Seiten 24-35, XP000896069
- KAIJSER P ET AL: "SESAME: the solution to security for open distributed systems" COMPUTER COMMUNICATIONS, Bd. 17, Nr. 7, 7. Juli 1994 (1994-07-07), Seiten 501-518, XP002324168 BUTTERWORTH-HEINEMANN LTD
- STAJANO F ET AL: "The resurrecting duckling: security issues for Ad-Hoc wireless networks" SECURITY PROTOCOLS. INTERNATIONAL WORKSHOP PROCEEDINGS, 15. September 1999 (1999-09-15), Seiten 1-11, XP002290299
- PIEMONT C: "GEISTREICHE VERBINDUNGEN INTELLIGENTE GERAETE IN DEZENTRALEN NETZEN" CT MAGAZIN FUER COMPUTER TECHNIK, VERLAG HEINZ HEISE GMBH., HANNOVER, DE, Nr. 20, 1998, Seiten 198-202, XP001106236 ISSN: 0724-8679
- EDWARDS K: "Core Jini" Juni 1999 (1999-06), PRENTICE HALL , XP002178476 * Seite 68, Zeile 18 - Seite 76, Zeile 13 *

## Beschreibung

Die Erweiterung von Netzen wird heutzutage üblicherweise zentral administriert. Fügt man ein neues Netzelement hinzu, so muss sichergestellt sein, dass es sich mit den bereits vorhandenen Netzelementen "versteht", dass also eine syntaktisch und semantisch korrekte Schnittstelle zum Netz festgelegt ist und entsprechende Schnittstellentreiber - auch 'Stubs' genannt - zum Einsatz kommen. Die Festlegung derartiger Schnittstellen ist insbesondere zwischen Systemen verschiedener Hersteller meist zeitaufwändig und sehr fehleranfällig, da z.B. Schnittstellen-Treiber üblicherweise nur dann miteinander vernetzt werden können, die auf derselben Schnittstellen-Version basieren.

Ein Konzept zur flexibleren Erweiterung von Netzen ist das sogenannte 'Plug & Play (PnP)', bei dem jedes Netzelement seine Schnittstelle mit Hilfe einer speziellen Schnittstellen-Beschreibungssprache spezifiziert und der Zugriff auf Dienste des Netzelements mit Schnittstellen-Treibern erfolgt, die unter Berücksichtigung der Schnittstellenspezifikation erstellt werden. Eine Anwendung des PnP-Konzepts liegt beispielsweise in den sogenannten Ad-Hoc-Netzen, bei denen Netzelemente unterschiedlicher Hersteller ihre Dienste jeweils denjenigen Netzelementen zur Verfügung stellen, die gerade in das Ad-Hoc-Netz integriert sind, wobei vorab völlig offen ist, welche Schnittstelle die jeweilen Netzelemente aufweisen. Eine Kurzbeschreibung dieses neuartigen Netztyps findet sich in Claudia Piemont, "Geistreiche Verbindungen - Intelligente Geräte in dezentralen Netzen", c't, Heft 20, 1998. Produkte auf dem Gebiet des PnP werden zur Zeit beispielsweise bei Sun (Jini™), Hewlett Packard (JetSend), Lucent (Inferno) oder Microsoft (uPnP = Universal Plug & Play¹) entwickelt.
¹ siehe auch http://www.upnp.org

Im folgenden werden exemplarisch die Jini™ Mechanismen der Firma Sun beschrieben. Dies stellt jedoch keine Einschränkung für die erfindungsgemäßen Mechanismen dar, die allgemein angewendet werden können. Die Architektur und Mechanismen von Jini™ werden in Sun Microsystems, "Jini™ Architectural Overview", Technical White Paper², 01/1999 beschrieben. Ad-hoc Netze, wie das von Jini™, zeichnen sich dadurch aus, dass Netzelemente, und damit auch die von ihnen angebotene Dienste, beliebig in ein Netz eingefügt und wieder aus diesem entfernt werden können.
² siehe auch http://www.sun.com/jini/whitepapers/architecture.pdf

Unter Diensten versteht man eine Instanz, die von einer Person, einem Programm oder einem anderen Dienst benutzt werden kann. Es kann sich z.B. um Hardware, Software, Filter, einen Kommunikationskanal, Speicherplatz und vieles andere mehr handeln. Zur Bearbeitung einer gestellten Gesamtaufgabe kann die Nutzung vieler einzelner Dienste erforderlich sein. Die jeweils gerade vorhandenen und somit nutzbaren Dienste sind in sogenannten Schwarzen Brettern - auch 'Blackboards' bzw. 'Lookup Functions' genannt - registriert.

Von den Schwarzen Brettern wird auch das zeitlich wahlfreie Einfügen und Entfernen von Diensten in das bzw. aus dem Netz gesteuert. Netzelemente können einem Schwarzen Brett ihre Existenz und ihre Dienste mitteilen - auch 'Join' genannt; ein Schwarzes Brett kann auch nach Netzelementen suchen, die Dienste anbieten - auch 'Lookup' bzw. 'Discovery' genannt. Für die Benutzung der Dienste wird ein Leasing-Mechanismus angeboten. Hier wird zwischen den beteiligten Instanzen eine Benutzungsdauer vereinbart, nach deren Ablauf die Ressourcen des benutzten Dienstes wieder freigegeben werden. Die Nutzung von Diensten, und damit die insbesondere hierzu erforderliche Kommunikation, erfolgt z.B. mittels Java Remote Method Invocation (RMI™), die konzeptuell mit den bewährten Remote Procedure Calls (RPC) vergleichbar sind.

Die Jini-Sicherheitsarchitektur ist so gestaltet, dass jedes Dienst einen Eigentümer hat und mit einer Zugriffskontrolle ausgestattet ist - d.h. der Dienst besitzt quasi die Identität seines Eigentümers. Dieser Eigentümer definiert zumindest für diejenigen Dienste, die er dem System zur Verfügung stellt, im allgemeinen auch dessen Nutzungsrechte. Wenn nun ein erster Dienst einen zweiten Dienst nutzt, so erfolgt diese Nutzung mit der Identität des zweiten Dienstes. Ob der Zugriff gestattet wird, hängt von der Zugriffskontrolle des ersten Dienstes ab - siehe hierzu auch Richard Sietmann, "Jini organisiert das Netz selbst", Funkschau, Heft 23, Seite 84, Kapitel "Sicherheit bei Jini", 1. Absatz, 1998. Dieses Konzept erfordert eine dezentrale Administration der Nutzungsrechte. Zudem steht ein Dienst, für den keine Zugriffskontrolle realisiert ist, allen Netzelementen eines Ad-Hoc-Netzes zur Verfügung.

Der Erfindung liegt somit die Aufgabe zugrunde, die gesicherte Nutzung eines Dienstes zu verbessern. Die Aufgabe wird durch die Merkmale des Patentanspruchs 1 gelöst.

Der wesentliche Aspekt der Erfindung besteht in einer gesicherten Nutzung eines Dienstes in einem Netz, insb. einem Ad-Hoc-Netz, mit einem Schwarzem Brett, in dem alle nutzbaren Dienste eingetragen werden, bei der nach Detektion eines noch nicht eingetragenen Dienstes geprüft wird, ob eine Nutzung des Dienstes zulässig ist und der Dienst nur dann in das Schwarze Brett eingetragen wird, wenn die Nutzung des Dienstes zulässig ist.

Einige wesentliche Vorteile der Erfindung seien im folgenden genannt:
- Die Nutzungsrechte können zentral administriert werden. Somit wird innerhalb des Wirkungsbereichs eines Schwarzen Bretts eine homogene und konsistente Verwaltung der Nutzungsrechte bewirkt.
- Dienste, die nicht genutzt werden können, erscheinen nicht mehr in dem Schwarzen Brett. Somit wird das Schwarze Brett übersichtlicher.
- Es wird auch für diejenigen Dienste eine Zugriffskontrolle bewirkt, für die keine individuelle Zugriffskontrolle implementiert ist. So kann z.B. administriert werden, dass ein firmeninterne Drucker nicht in einem Schwarzen Brett auftaucht, das auch für firmenexterne Netzelemente zugänglich ist.

Nach dem erfindungsgemäßen Verfahren wird in dem Schwarzen Brett eine Nutzungssoftware hinterlegt, die von einem Dienstnutzer zumindest vor dessen erster Nutzung des Dienstes geladen wird.

Vorteilhaft entfällt infolge des Ladens der Nutzungssoftware - auch 'Schnittstellentreiber' genannt - bei dem Dienstnutzer die Installation eines dienstspezifischen Schnittstellentreibers zur Nutzung des Dienstes. Somit entfallen auch die eingangs beschriebenen Probleme.

Gemäß dem erfindungsgemäßen Verfahren wird die Nutzungssoftware mit zumindest einer Sicherungsfunktion zu einer zumindest teilweise gesicherten Nutzungssoftware erweitert.

Somit wird auch nach dem Laden der Nutzungssoftware durch den Dienstnutzer vorteilhaft eine von dem Schwarzen Brett unabhängige Sicherung der Nutzung des Dienstes in dem Netzelement des Dienstnutzers bewirkt.

Entsprechend einer Variante des erfindungsgemäßen Verfahrens weist die Nutzungssoftware ein Format auf, das von einer virtuellen Maschine ausgeführt wird. Somit ist die Nutzungssoftware auf jedem Netzelement benutzbar, auf dem eine auf das Netzelement ausgelegte Version der virtuellen Maschine installiert ist. Die Nutzungssoftware wird somit unabhängig von der konkreten Ausgestaltung der jeweiligen Netzelemente.

Nach einer Variante des erfindungsgemäßen Verfahrens ist vorgesehen, dass die Erweiterung dann erfolgt, wenn die Prüfung ergibt, dass die Nutzung des Dienstes zulässig ist. Somit erfolgt die Erweiterung nur dann, wenn sie erforderlich ist, wodurch unnötige Erweiterungen vermieden werden. Die Leistungsfähigkeit des Schwarzen Bretts wird hierdurch erhöht.

Weitere vorteilhafte Ausgestaltungen der Erfindung ergeben sich aus den unter- oder nebengeordneten Ansprüchen.

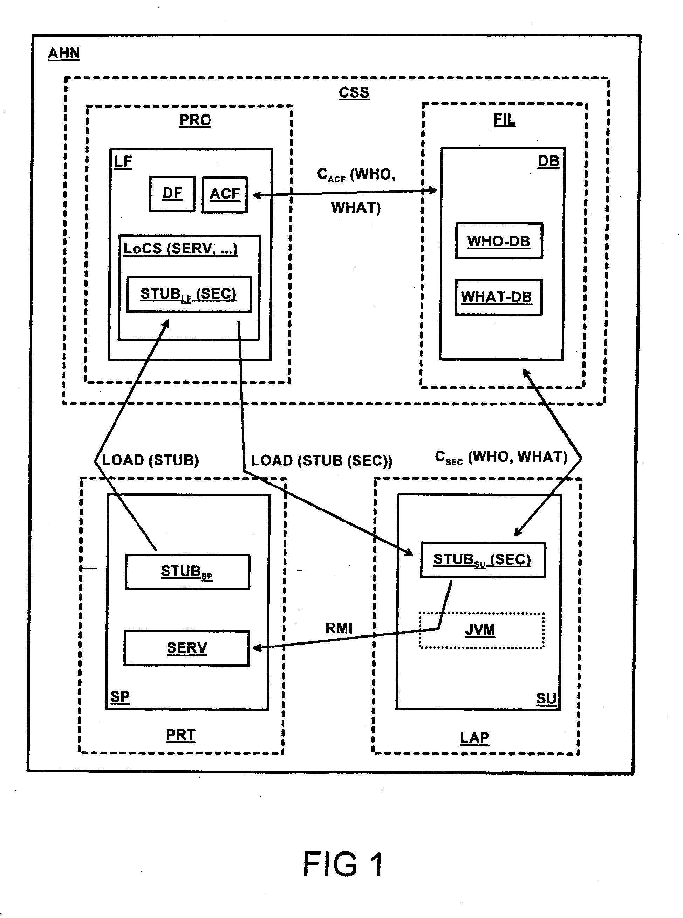

Das erfindungsgemäße Verfahren wird im folgenden anhand von einer Figur näher erläutert. Dabei ist in Figur 1 beispielhaft eine Anordnung dargestellt, in der das erfindungsgemäße Verfahren zum Ablauf kommt, aufweisend:
- einen Dienstanbieter SP mit einem Dienst SERV, der prinzipiell genutzt werden kann, und einer Nutzungssoftware STUB_{SP} zur schnittstellenkonformen Nutzung RMI des Dienstes SERV.
- ein Schwarzes Brett LF mit eine Discovery-Funktion DF zur Detektion von prinzipiell nutzbaren Diensten SERV, einer Zulässigkeitsprüffunktion ACF zur Prüfung der Zulässigkeit eines detektierten Dienstes SERV und einer Liste zulässiger Dienste LoCS, worin der Dienst SERV registriert und dessen Nutzungssoftware STUB_{LF}, ggf. ergänzt um eine Sicherungsfunktion SEC, hinterlegt ist.
- einen Dienstnutzer SU mit einer geladenen Instanz der ergänzten Nutzungssoftware STUB_{SU} (SEC), die von einer virtuellen Maschine JVM ausgeführt wird.
- eine Datenbasis DB, in der eine Authentifikationsdatenbasis WHO-DB und eine Autorisationsdatenbasis WHAT-DB hinterlegt sind.

Zur Darstellung einer möglichen Einbettung der Anordnung zur Durchführung des Verfahrens in ein physikalisches Umfeld ist in Figur 1 beispielhaft der Dienstanbieter SP als Drucker PRT, der Dienstnutzer SU als Laptop LAP und das Schwarze Brett LF als Prozess PRO ausgebildet, der z.B. auf einem zentralen Sicherheitsserver ZSS des Ad-Hoc-Netzes AHN zum Ablauf gelangt. Die Datenbasis DB ist z.B. in den Kontext des Prozesses PRO integriert, indem sie als Datei FIL auf der Festplatte Sicherheitsservers ZSS realisiert ist. Die genannten physikalischen Einrichtungen - auch 'Netzelemente' genannt - bilden ein Ad-Hoc-Netz AHN.

Für ein Ausführungsbeispiel der Erfindung sei angenommen, dass, das der Dienst SERV von dem Dienstnutzer SU genutzt werden soll. Der Dienstnutzer SU sei hierzu mit dem Dienstanbieter SP spontan in dem Ad-Hoc-Netz AHN zusammengeschlossen, in dem zudem zumindest das Schwarze Brett LF vorgesehen ist.

Anfangs sei dem Schwarzen Brett LF der Dienst SERV unbekannt, da z.B. der Dienstanbieter noch nicht in das Ad-Hoc-Netz integriert ist. Nach erfolgter Integration des Dienstes SERV wird dieser von der Discovery-Funktion DF erkannt. Im Anschluss daran wird eine erfindungsgemäße Prüfung C_{ACF} durchge-führt, indem der erkannte Dienst SERV mit Prüfdaten verglichen wird, die in der Datenbasis DB hinterlegt wird. Beispielsweise wird die Identität des Dienstanbieters SP mit einer Authentifikation WHO gegen die Authentifikationsdatenbasis WHO-DB und/oder die Berechtigung des Dienstanbieter, den Dienst SERV auf dem Schwarzen Brett zu registrieren, mit einer Autorisierung WHAT mit Hilfe der Autorisierungsdatenbasis WHAT-DB geprüft. Sofern diese Prüfung C_{ACF} ergibt, dass eine spätere Nutzung RMI des Dienstes SERV zulässig ist, wird der Dienst SERV in die Liste der zulässigen Dienste LoCS eingetragen.

Gemäß einer Variante der Erfindung wird zudem die Nutzungsschnittstelle STUB des Dienstes SERV mit einer Ladeoperation LOAD geladen und in dem Schwarzen Brett LF, z.B. in der Liste der zulässigen Dienste LoCS, hinterlegt. Gegebenenfalls wird die geladene Nutzungssoftware STUB zumindest teilweise um eine Sicherungsfunktion SEC erweitert. Vorzugsweise erfolgt diese Erweiterung nur dann, wenn die Prüfung C_{ACF} ergibt, dass eine Nutzung RMI des Dienstes SERV zulässig ist.

Eine Nutzung RMI des Dienstes SERV durch den Dienstnutzer SU kann erfolgen, sobald der Dienstnutzer SU in das Ad-Hoc-Netz integriert ist. Im Anschluss daran kann durch eine Anfrage bei dem Schwarzen Brett LF erkannt werden, dass der Dienst SERV in diesem Ad-Hoc-Netz genutzt werden kann. Hierzu lädt der Dienstnutzer SU die im Schwarzen Brett LF hinterlegte Nutzungssoftware STUB. Anschließend kommt sie, z.B. mit Hilfe einer bereits installierten virtuellen Maschine JVM, zum Ablauf. Hierdurch wird die Nutzung RMI des Dienstes SERV durch den Dienstnutzer SU bewirkt.

Gemäß einer Ausgestaltung der Erfindung wird hierbei von der ergänzten Sicherungsfunktion SEC - z.B. bei jeder - Nutzung RMI des Dienstes SERV eine nochmalige Prüfung C_{SEC} der Authentifikation WHO und/oder Autorisierung WHAT des Dienstnutzers SU bewirkt. Somit kann sichergestellt werden, dass keine unberechtigte Nutzung RMI, z.B. durch von unberechtigten Dritten kopierte oder manipulierte Schnittstellenaufrufe, erfolgt.

Abschließend sei der beispielhafte Charakter dieser physikalischen Anordnung betont. Jede beliebige andere Verteilung des Funktionen auf die physikalischen Einrichtung ist möglich. So könnte das Schwarze Brett LF z.B. auch in den Drucker PRT integriert sein, auf dem Laptop LAP vorgesehen werden oder in einem Handy zum Ablauf kommen. Die Datenbasis DB könnte in eine, auch anderen Sicherungsvorgängen dienenden, Sicherungsdatenbank (z.B. eine Userverwaltung einer Netzdomäne) integriert sein. Diese weitgehend wahlfreie Gestaltung der Anordnung wird in Figur 1 durch eine gestrichelte Darstellung der physikalischen Einrichtungen angezeigt.

Zudem sei darauf hingewiesen, dass die Erfindung nicht auf Ad-Hoc-Netze AHN beschränkt ist, sondern in jedem beliebigen Kommunikationsnetz angewandt werden kann, in dem PnP-Konzepte mit Schwarzen Brettern LF zum Einsatz kommen. Beispielsweise ist eine Anwendung vorgesehen in
- Weitverkehrs-Kommunikationsnetzen, wie z.B. dem Internet,
- lokalen Kommunikationsnetzen - auch 'Local Area Network' bzw. 'LAN' genannt,
- virtuellen Kommunikationsnetzen, wie z.B. einem Virtual Private Network - auch 'VPN' genannt.

## Patentansprüche

1. Verfahren zur gesicherten Nutzung eines Dienstes mit einem Schwarzem Brett (LF), in das nutzbare Dienste eingetragen werden,
mit folgenden Schritten:
(a) Detektion eines noch nicht in das Schwarze Brett eingetragenen Dienstes (SERV);
(b) erste Prüfung (C_{ACF}), ob eine Nutzung (RMI) des Dienstes zulässig ist;
(c) Eintragung des Dienstes in das Schwarze Brett nur dann, wenn die Nutzung des Dienstes zulässig ist;
(d) Hinterlegung einer Software (STUB) zur Nutzung des Dienstes in dem Schwarzen Brett;
(e) Erweiterung der Software mit zumindest einer Sicherungsfunktion (SEC) zu einer zumindest teilweise gesicherten Software (STUB (SEC));
(f) Laden der gesicherten Software von einem Nutzer (SU) des Dienstes vor der ersten Nutzung des Dienstes;
(g) zweite Prüfung (C_{SEC}) durch die Sicherungsfunktion vor der Nutzung des Dienstes, ob die Nutzung des Dienstes durch den Nutzer zulässig ist.

2. Verfahren nach dem vorstehenden Anspruch,
bei dem die zweite Prüfung vor jeder Nutzung des Dienstes durchgeführt wird.

3. Verfahren nach einem der vorstehenden Ansprüche,
bei dem die erste Prüfung eine Authentifikation (WHO) und/oder Autorisierung (WHAT) eines Anbieters (SP) des Dienstes umfasst.

4. Verfahren nach einem der vorstehenden Ansprüche,
bei dem die zweite Prüfung eine Authentifikation (WHO) und/oder Autorisierung (WHAT) des Nutzers umfasst.

5. Verfahren nach einem der vorstehenden Ansprüche,
bei dem beide Prüfungen einen Vergleich mit Prüfdaten umfassen, die in einer gemeinsamen Datenbasis DB hinterlegt sind.

6. Verfahren nach einem der vorstehenden Ansprüche,
bei dem die Software ein Format aufweist, das von einer virtuellen Maschine (JVM) ausgeführt wird.

7. Produkt, umfassend Mittel zur Durchführung eines Verfahrens nach einem der Verfahrensansprüche.

8. Produkt nach Anspruch 7, umfassend ein Computerprogramm.

## Claims

1. Method for securely using a service with a notice board (LF) on which usable services are recorded,
having the following steps:
(a) a service (SERV) which has not yet been recorded on the notice board is detected;
(b) a first test (C_{ACF}) is carried out in order to determine whether use (RMI) of the service is permissible;
(c) the service is recorded on the notice board only when use of the service is permissible;
(d) software (STUB) for using the service is stored on the notice board;
(e) the software is extended with at least one backup function (SEC) for at least partially secure software (STUB (SEC));
(f) the secure software is loaded by a user (SU) of the service before the service is first used;
(g) a second test (C_{SEC}) is carried out by the backup function before the service is used in order to determine whether use of the service by the user is permissible.

2. Method according to the preceding claim,
in which the second test is carried out before each use of the service.

3. Method according to one of the preceding claims,
in which the first test comprises authentication (WHO) and/or authorization (WHAT) of a provider (SP) of the service.

4. Method according to one of the preceding claims,
in which the second test comprises authentication (WHO) and/or authorization (WHAT) of the user.

5. Method according to one of the preceding claims,
in which both tests comprise a comparison with test data stored in a common database DB.

6. Method according to one of the preceding claims,
in which the software has a format which is executed by a virtual machine (JVM).

7. Product comprising means for carrying out a method according to one of the method claims.

8. Product according to Claim 7 comprising a computer program.

## Revendications

1. Procédé pour l'utilisation sécurisée d'un service avec un tableau d'affichage (LF) dans lequel des services utilisables sont enregistrés, comportant les étapes suivantes :
(a) détection d'un service (SERV) qui n'est pas encore enregistré dans le tableau d'affichage ;
(b) premier contrôle (C_{ACF}) pour établir si une utilisation (RMI) du service est autorisée ;
(c) enregistrement du service dans le tableau d'affichage uniquement si l'utilisation du service est autorisée ;
(d) dépôt, dans le tableau d'affichage, d'un logiciel (STUB) pour l'utilisation du service ;
(e) élargissement du logiciel par au moins une fonction de sécurisation (SEC) pour obtenir un logiciel au moins partiellement sécurisé (STUB (SEC)) ;
(f) chargement du logiciel sécurisé par un utilisateur (SU) du service avant la première utilisation du service ;
(g) deuxième contrôle (C_{SEC}) par la fonction de sécurisation, avant l'utilisation du service, pour établir si l'utilisation du service par l'utilisateur est autorisée.

2. Procédé selon la revendication précédente, selon lequel le deuxième contrôle est effectué avant chaque utilisation du service.

3. Procédé selon l'une des revendications précédentes, selon lequel le premier contrôle inclut une authentification (WHO) et/ou une autorisation (WHAT) d'un fournisseur (SP) du service.

4. Procédé selon l'une des revendications précédentes, selon lequel le deuxième contrôle inclut une authentification (WHO) et/ou une autorisation (WHAT) de l'utilisateur.

5. Procédé selon l'une des revendications précédentes, selon lequel les deux contrôles incluent une comparaison avec des données de contrôle qui sont déposées dans une base de données communes DB.

6. Procédé selon l'une des revendications précédentes, selon lequel le logiciel présente un format qui est exécuté par une machine virtuelle (JVM).

7. Produit comprenant des moyens pour exécuter un procédé selon l'une des revendications relatives au procédé.

8. Produit selon la revendication 7, comprenant un programme informatique.
